# EUROPEAN PATENT SPECIFICATION

(11) **EP 3 369 707 B1**
(45) Date of publication and mention of the grant of the patent: **18.03.2020**
(21) Application number: 18157894.9
(22) Date of filing: 21.02.2018
(51) Int. Cl.: C01D 7/18, C01B 32/60, C01B 32/50, B01D 53/14, B01D 53/75

(54) **PROCESS OF MANUFACTURING SODIUM CARBONATE INTEGRATED WITH UPTAKING CARBON DIOXIDE BY AMMONIA PROCESS**
VERFAHREN ZUR HERSTELLUNG VON NATRIUMCARBONAT MIT INTEGRIERTER KOHLENDIOXIDAUFNAHME DURCH EIN AMMONIAKVERFAHREN
PROCÉDÉ DE FABRICATION DE CARBONATE DE SODIUM INTÉGRÉ À L'ABSORPTION DE DIOXYDE DE CARBONE PAR UN PROCESSUS D'AMMONIAC

(30) Priority: 21.02.2017 PL 42058817
(43) Date of publication of application: 05.09.2018
(73) Proprietor: CIECH R&D Sp. z o.o., 00-684 Warszawa (PL); Instytut Chemicznej Przeróbki Wegla, 41-803 Zabrze (PL)
(72) Inventor: Skowron, Kazimierz, 88-100 Inowroclaw (PL); Zorawski, Damian, 13-230 Lidzbark (PL); Kiedzik, Lukasz, 88-100 Inowroclaw (PL); Zelazny, Ryszard, 88-100 Inowroclaw (PL); Szajkowska-Kobus, Sylwia, 02-495 Warszawa (PL); Wegner, Slawomir, 88-100 Inowroclaw (PL); Wachowiak, Maciej, 88-100 Inowroclaw (PL); Sobczak, Waldemar, 88-100 Inowroclaw (PL); Kowalik, Henryk, 88-160 Janikowo (PL); Hulisz, Robert, 88-100 Inowroclaw (PL); Sobolewski, Aleksander, 41-800 Zabrze (PL); Tatarczuk, Adam, 41-800 Zabrze (PL); Chwola, Tadeusz, 41-807 Zabrze (PL); Krotki, Aleksander, 44-353 Olza (PL); Jastrzab, Krzysztof, 41-902 Bytom (PL); Wieclaw-Solny, Lucyna, 41-500 Chorzow (PL); Spietz, Tomasz, 43-308 Bielsko-Biala (PL); Wilk, Andrzej, 44-100 Gliwice (PL)
(74) Representative: Patpol Kancelaria Patentowa Sp. z o.o.

(56) References cited:
- EP-A1- 2 757 071
- WO-A1-2016/102568
- WO-A1-2017/001690
- US-A- 2 893 833

## Description

### Description of the invention

### Field of the invention

This invention is related to improvements in the integrated process for manufacturing sodium carbonate by Solvay ammonia process (*further called the ammonia-soda process*). In particular, the invention concerns the method and system used for removing carbon dioxide from process gases by the ammonia process and using the removed carbon dioxide in production of soda by the ammonia-soda process.

The ammonia-soda process is being developed for more than 150 years, but there is still room for improving the production process. At a worldwide production scale of millions tonnes per *annum,* even slight improvements concerning the use of raw materials, limiting energy consumption, and limiting wastes translate into very serious benefits related to both economic and environmental issues. Due to legal, economical, and ecological issues, reduction of carbon dioxide emission becomes a very important aspect.

### State of the art

The source of carbon dioxide and burnt lime in the process for production of soda ash and baking soda are limestone and a fuel used for decomposition thereof. Heat necessary for limestone decomposition comes from combustion of solid, liquid, or gaseous fuels.

Carbon dioxide and burnt lime form as a result of calcium carbonate decomposition reaction, according to the following reaction:

CaCO₃ = CaO + CO₂

Precipitation of raw sodium hydrogen carbonate occurs during carbonation (saturation with carbon dioxide) of ammoniated brine. One can generally assume that the process for carbonation of ammoniated brine proceeds according to the following total reaction:

NaCl + NH₃ + CO₂ + H₂O = NaHCO₃ + NH₄Cl

This reaction is reversible, wherein conversion of sodium chloride into sodium hydrogen carbonate is not complete.

Carbonation of ammoniated brine is a multi-step process, and begins as early as in the absorption node. The process of saturating purified brine with ammonia and carbon dioxide proceeds according to the following reactions

NH₃ + H₂O = NH₄OH

2 NH₃ + CO₂ + H₂O = (NH₄)₂CO₃

Raw sodium hydrogen carbonate precipitated in carbonation columns, after separation from the mother liquor on filters, is subjected to thermal decomposition in calcining furnaces according to the reaction:

2 NaHCO₃ = Na₂CO₃ + CO₂ + H₂O,

and the obtained sodium carbonate is light soda ash. Light soda may be regarded as a ready commercial product, or, following further processing by hydration and drying, or densification, may be processed into dense soda.

Following separation of raw sodium hydrogen carbonate on filters, the remaining mother liquor is subjected to the ammonia recovery process, called distillation. Ammonium carbonate and hydrogen carbonate undergo thermal decomposition, to yield ammonia and carbon dioxide as products. The heat source is low-pressure steam. Ammonia contained in the form of ammonium chloride is released using lime milk and heating.

The decomposition processes of ammonium salts proceed according to the reactions:

NH₄HCO₃ + Q = NH₃ + CO₂ +H₂O

(NH₄)₂CO₃ + Q = 2 NH₃ + CO₂ + H₂O

2 NH₄Cl + Ca(OH)₂ = 2 NH₄OH + CaCl₂

NH₄OH +Q = NH₃ + H₂O

These reactions require heat that is provided to the process using steam.

Soda ash may be a raw material for manufacturing baking soda. The main step of preparation of baking soda preparation is the process for carbonation of the solution of sodium carbonate and sodium hydrogen carbonate. It is carried out in a custom-made carbonation column and consists in saturating the aqueous solution of sodium carbonates with gaseous carbon dioxide. Baking soda is formed according to the reaction:

Na₂CO₃ + CO₂ + H₂O = 2 NaHCO₃

Absorption of carbon dioxide in the column is not complete and it depends on a concentration of sodium carbonate and hydrogen carbonate in the process operating conditions. As a result, the gas exiting carbonation columns contains up to 30 vol.% of CO₂.

Operation of the lime kiln plant and parameters achieved by this plant are of key significance for the economics of the entire production process. One especially important parameter is the CO₂ concentration in the produced kiln gas, that is usually in the range of 30 - 42 vol.%. This parameter has an important effect on the energy consumption for transport and compression of gaseous streams to carbonation columns in the production of soda ash and baking soda, on the yield of the carbonation process, on the size of crystals of the manufactured sodium bicarbonate and the humidity thereof, and, consequently, it is of key significance for consumption of energy and raw materials in the production process. The technological operation of lime kilns (including CO₂ concentration in the kiln gas) depends, inter alia, on the quality of the raw materials used in the process, i.e., limestone and fuel. Among the potential possibilities of reducing the cost of used fundamental raw material, namely limestone, there is, inter alia, use of fine limestone having a granulation in the range of 10 - 40 mm. However, use of fine limestone for the lime burning process is related to reduction of CO₂ concentration in the obtained kiln gas down to 25 - 35 vol.%, what is disadvantageous from the viewpoint of the carbonation process in production of soda ash and in production of baking soda, since this causes larger consumption of energy and raw materials.

Carbon dioxide contained in the kiln gas stream at a concentration of 30 - 42 vol.% (top gas, carbonation gas) and in the bottom gas stream (mixed gas) at a concentration of 60 - 85 vol.%, being supplied to the ammoniated brine carbonation plant in the production of soda ash process is not consumed completely (because of equilibrium constraints of the reactions), and its part, following purification of the gas stream from ammonia, is emitted to the atmosphere. In the soda ash plant, the post-reaction gas stream from carbonation columns, containing unreacted amounts of carbon dioxide and ammonia, is subjected to purification from the excessive amounts of these gases. This is carried out in the serial co-operating scrubbers intended to lower the carbon dioxide and ammonia concentrations in outlet gases. The gas leaving the scrubbers, being emitted to the atmosphere, contains 8-16 vol.% of CO₂ and trace amounts of ammonia.

In the baking soda production process, kiln gas containing 30 - 42 vol.% of CO₂ is used for carbonation of a solution of sodium carbonate and hydrogen carbonate. The equilibrium conditions of the carbon dioxide absorption along with chemical reaction do not allow full utilisation of carbon dioxide. A part of it is emitted to atmosphere in a mixture of inert gases and steam. Before bleeding to atmosphere, the outlet gas from carbonation columns of the baking soda plant is supplied to the scrubber sprinkled with soda solution, where purification and absorption of part of carbon dioxide occurs. The stream released to atmosphere contains 15 - 30 vol.% of CO₂.

Summing up, the sources of emission of carbon dioxide to the atmosphere comprise: the excessive gas stream from the limestone decomposition, as well as unreacted carbon dioxide-containing outlet gas streams from the process of carbonation of ammoniated brine in production of soda ash and carbonation of the solution of sodium carbonate and hydrogen carbonate in the baking soda production process. Incomplete carbon dioxide consumption results from equilibrium conditions of the chemical reactions occurring in carbonation columns. The optimised operation of the production process results in emission of 0.2 - 0.4 tonnes of 100% CO₂/tonne of soda (source: Reference Document on Best Available Techniques for the Manufacture of Large Volume Inorganic Chemicals - Solids and Others industry, August 2007, European Commission Document).

There are numerous methods aiming at limiting at the emission of carbon dioxide into atmosphere, including those comprising uptake of carbon dioxide and returning to the production process. These are, in particular, chemical absorption methods, temperature swing absorption method (TSA), pressure swing absorption method (PSA), cryogenic distillation method, and membrane method.

The most frequently used methods for uptake CO₂ from industrial gases are the chemical absorption methods. The absorbents used are the solutions of amines, for example, of monoethanolamine (MEA), diethanolamine (DEA), diglycolamine (DGA), N-methyldiethanolamine (MDEA), 2-amino-2-methylpropanol (AMP), or piperazine (PZ). Apart from amine solutions, one can use aqueous ammonia solutions.

In the case of using chemical absorption methods (both with amines and with ammonia), the gas to be purified is contacted in a counter-current with the absorbent stream in the absorption column. During the contact of ammonia with carbon dioxide, the following reactions (1) - (4) occur:

CO₂(g) ↔ CO₂(aq) (1)

2NH₃(aq) + H₂O + CO₂(aq) ↔ (NH₄)₂CO₃ (aq) (2)

(NH₄)₂CO₃ (aq) + CO₂(aq) + H₂O ↔ 2NH₄HCO₃(aq) (3)

(NH₄)₂CO₃ (aq) ↔ NH₂COONH₄ (aq) + H₂O (4)

In an aqueous solution, ammonia and carbon dioxide form ammonium carbonate (NH₄)₂CO₃, ammonium hydrogen carbonate NH₄HCO₃, and ammonium carbamate NH₂CO₂NH₄. The reactions (1) - (4) are reversible and their direction depends on pressure, temperature and concentrations in the system. All these reactions are exothermic, so their equilibrium is shifted right at lower temperatures. This is why using low temperatures is recommended in the case of absorption, whereas the regeneration process, i.e., transformation of ammonium hydrogen carbonate and carbamate into ammonium carbonate, to release absorbed CO₂, occurs in the case of supplying heat energy.

The regeneration reactions along with their enthalpies are listed below:

NH₄HCO₃ (aq) ↔ NH₃ + H₂O + CO₂(g) ΔH = 64.3 kJ/mol (5)

(NH₄)₂CO₃ (aq) ↔ 2NH₃ + H₂O + CO₂(g) ΔH = 101.2 kJ/mol (6)

2NH₄HCO₃ - (NH₄)₂CO₃ (aq) + H₂O + CO₂ (g) ΔH = 26.9 kJ/mol (7)

NH₂COONH₄ (aq) ↔ 2NH₃ + CO₂(g) ΔH =72.3 kJ/mol (8)

As one can see, the most favourable option would be to carry out the regeneration process at the boundaries of decomposition of ammonium hydrogen carbonate into ammonium carbonate, since this reaction requires providing the least amount of heat (26.9 kJ/mol). Nevertheless, according to the reactions (1) - (4), the saturated absorbent solution contains also carbamate ions (NHCO₃⁻) and not only hydrogen carbonate ions (HCO₃⁻). Compared to the amine solutions, use of ammonia has the following advantages:
- higher absorption capacity,
- lower heat of absorbent recovery,
- low absorbent cost,
- low corrosivity,
- resistance of absorbent against degradation processes,
- ability to simultaneous removal of SO₂, NOₓ and mercury.

The main problem in using ammonia as an absorbent is its high volatility. This results in emission of this gas into atmosphere and contamination of the obtained CO₂ stream. In order to minimise NH₃ emission and further purify the obtained CO₂ stream, water washing columns are used. The formed aqueous ammonia solution is of low concentration and is not suitable for direct use in the existing system. This is why ammonia is recovered by warming up the solution, what is carried out in separate apparatuses for ammonia recovery. However, this operation requires using an additional energy source.

Another problem appearing when ammonia is used as absorbent, is the possibility of precipitating solids (ammonium carbonate, hydrogen carbonate and carbamate) in the places where the solution is cooled down. Most usually, this happens in the area of the desorption column where released CO₂ can dissolve in the liquefied condensate containing minor amounts of ammonia. In such a situation, the solution often becomes saturated with ammonium carbonate that crystallises. To avoid this, the ammonia concentration in solutions is often as low as 2 - 8%.

European patent No. EP1781400 to Alstom Technology Ltd., having the priority date of 06.08.2004, discloses the method for purifying exhaust gases and carbon dioxide absorption by an ammoniated solution or suspension (in particular, suspension of ammonium salts) at a temperature of 0 - 20°C, preferably 0 - 10°C, known as *"chilled ammonia process"* (CAP). Releasing of carbon dioxide occurs after compressing the said ammoniated solution or suspension with a high pressure pump, preferably to the pressure of 10 - 28 bar, and warming to 100 - 150°C. Carrying CO₂ absorption at low temperature using concentrated ammonia solution (28 wt.%) improves the effectiveness of this process and reduces emission of NH₃. Regeneration at a temperature of >120°C and under pressure of >20 bar produces a compressed CO₂ stream having low content of steam and ammonia. A disadvantage of this method is the necessity to use high pressures (what increases the energy consumption for compressing of media), and also the tendency for plant choking by the formed precipitates.

USA patent No. US9469547 to Alstom Technology Ltd., having the priority date of 17.01.2013, discloses an integrated method for carbon dioxide capture and production of soda ash. Carbon dioxide is removed from the gas process stream by absorption in an ammoniated solution, and then desorbed in a regenerator, to obtain carbon dioxide-rich gas stream and carbon dioxide-depleted ammoniated solution. Said gas stream, preferably directly, is sent from regenerator to carbonator, where carbonation of ammoniated brine with carbon dioxide occurs. The ammonia-containing fluid, being produced in the soda-ash process, is returned to carbon dioxide absorption from said stream of process gas.

The international patent application publication No. WO2016/102568A1 to Solvay SA, having the priority date of 22.12.2014, discloses the process for manufacturing sodium carbonate/sodium hydrogen carbonate. This document describes concentrating carbon dioxide from lean kiln gas using the temperature swing concentrating module or using the amine method concentrating module.

European patent No. EP2910295 to General Electric Technology GmbH, having the filing date of 25.02.2014, discloses the device and method for integrated processing of outlet gases and production of soda ash. The technical solution consists in binding carbon dioxide from outlet gas in carbonator using calcium oxide, to form calcium carbonate and releasing carbon dioxide from calcium carbonate in a calcining furnace. This process is integrated with a production process of soda ash by the ammonia-soda process.

The instant inventors, attempting to modernise production by integrating the existing plant for production of soda ash, baking soda and soil lime with the process for carbon dioxide uptake, unexpectedly found that such a close integration of processes makes it possible to simultaneously achieve many benefits, in particular, comprising: improved use of raw materials, reducing the environmental load of carbon dioxide emission, reducing the process streams, reducing the energy consumption for compression, pumping, and heating or cooling, possibility of using process streams at lower carbon dioxide concentrations, possibility of using limestone of inferior quality, greater flexibility of plant operation, and possibility of receiving external streams containing waste carbon dioxide from outside the plant.

European patent EP2757071 A1 discloses a method for producing sodium carbonate by integration of a carbon dioxide capture process with an ammonia-soda process.

### Definitions

A list of definitions of terms used in this specification, including some synonyms, is presented below. In the case of conflict with the terms used in the art, the meanings indicated here take precedence. The conventionally used terms **method** and **process** are equivalent.
**Carbon dioxide absorber** - plant for absorption of carbon dioxide from lean gases.
**Absorption** - part of the soda ash plant/process, where purified brine is saturated with ammonia contained in the ammoniated gas from distillation. **Ammoniated brine** is formed there.
**Raw bicarbonate** - an intermediate in preparation of soda ash. The main component is NaHCO₃ (ca. 80 wt.%), with admixture of ammonium salts and water.
**Calcium chloride** - the main component is CaCl₂; by-product prepared from clear distiller effluents.
**Carbon dioxide desorber** - plant for desorption of carbon dioxide from the saturated absorbent solution downstream the absorber.
**Distillation/ammonia recovery** - part of the soda ash plant/process, where ammonia in the form of ammonium salts contained in the mother liquor is recovered and returned to absorption in the form of gas. In this phase of the process, wastes are generated in the form of suspension of calcium carbonate and other substances insoluble in an aqueous solution of calcium chloride and sodium chloride; these wastes are called **distiller effluents/waste** waters.
**Carbon dioxide/**CO₂ - it is produced in the ammonia-soda process by lime burning and combustion of coke; other fuels, such as anthracite, gas, or fine coal, also can be used.
**Filtration** - part of the soda ash plant/process, where the raw bicarbonate precipitate is separated from the **mother liquor.**
**Bottom gas/mixed gas** - gas having a carbon dioxide concentration most often in the range of 60 - 85 vol.%, following mixing the kiln gas and the calcination gas (>95 vol.% of CO₂). It is supplied to the bottom part of a carbonation column (the ammonia-soda process).
**Top gas** - kiln gas, usually having a carbon dioxide concentration in the range of 30 - 42 vol.%; it is supplied to the middle part of a carbonation column (the ammonia-soda process).
**Carbonation gas** - kiln gas, usually having a carbon dioxide concentration in the range of 30 - 42 vol.%; it is supplied to the bottom part of a carbonation column in the washing phase (the ammonia-soda process).
**Outlet gas from soda ash** - outlet gas from carbonation in the production of soda ash, containing 8 - 16 vol.% of CO₂.
**Outlet gas from baking soda** - outlet gas from carbonation in the baking soda production process, containing 15 - 30 vol.% of CO₂.
**Kiln gas** - gas produced in lime kilns, usually containing 30 - 42 vol.% of CO₂.
**Lean kiln gas** - kiln gas having a CO₂ concentration of 25 - 35 vol.%.
**Lean gases**/diluted gases - outlet gases from the soda ash production processes, baking soda production, and lean kiln gas.
**Limestone** - the fundamental mineral raw material for production of soda ash. Typically, a fraction having granulation in the range of 80 - 150 mm is used in the soda production process.
**Carbonation** (soda ash plant) - part of the soda ash plant/process, where ammoniated brine is saturated with CO₂ containing gases. A raw bicarbonate suspension is formed. The process is carried out in a carbonation column.
**Carbonation** (baking soda plant) - part of the baking soda plant/process, where the purified solution of sodium carbonate and hydrogen carbonate is saturated with carbon dioxide. A refined bicarbonate suspension is formed. The process is carried out in a carbonation column.
**Ammoniated condensate** - the condensate resulting from cooling off-gas from the distillation process.
**Distilled condensate** - the condensate after stripping ammonia.
**Calcination process condensates** - aqueous solution of ammonium salts and of soda ash formed in the process of purification and cooling off-gas from calcining furnaces.
**Crystallisation/drying** - part of the soda ash plant/process that consists in crystallisation and drying of sodium carbonate monohydrate. Soda ash/dense calcined soda is formed.
**Slaking of burnt lime** - part of the soda ash process, consisting in quenching burnt lime with water, to yield **lime milk** required for ammonia recovery.
**Condensate mixer**/cooler - a device for making an appropriate solution of ammoniated condensates used in carbon dioxide absorption process.
**Steam from expander of distiller effluents** - off-gas formed by expansion of the fluid exiting the bottom part of the distillation apparatus, under pressure of 1.5 - 1.6 bar.
**Lime kilns** - part of the soda ash plant/process, where burnt lime and CO₂ containing gas are produced. Vertical/shaft kilns are most often used in soda industry; horizontal kilns are more rarely used. The raw materials are limestone and a fuel such as coke, anthracite, gas, fine coal.
**Gas separation scrubber** - the scrubber for absorption of ammonia to obtain carbon dioxide.
**Final scrubber** - scrubber for final purification of carbon dioxide from ammonia.
**Ammoniated brine** - product of saturation of purified brine with the ammoniated gas from distillation. Depending on the absorption stage, it differs in ammonia concentration.
**Soda ash**/calcined soda - the main component is Na₂CO₃; the product produced by an ammonia-soda process. The fundamental raw materials are: **purified brine** and **limestone.**
**Light soda, dense soda** - grades of soda ash differing in granulation and bulk density.
**Baking soda**/refined bicarbonate/refined sodium hydrogen carbonate - the main component is NaHCO₃; the raw materials for the production are soda ash and a CO₂ containing gas.
**Purified brine** - the halite solution purified from calcium and magnesium salts.
**Halite** - the main component is NaCl; the fundamental mineral raw material for soda ash production.
**Brine wastes** - distiller effluents/waste waters.
**Burnt lime** - product of thermal decomposition of limestone, used for preparation of lime milk.
**Lime fertilizer** - solids contained in distiller effluents converted into calcium fertilizer (soil lime) for use in agriculture.

### Brief description of drawing

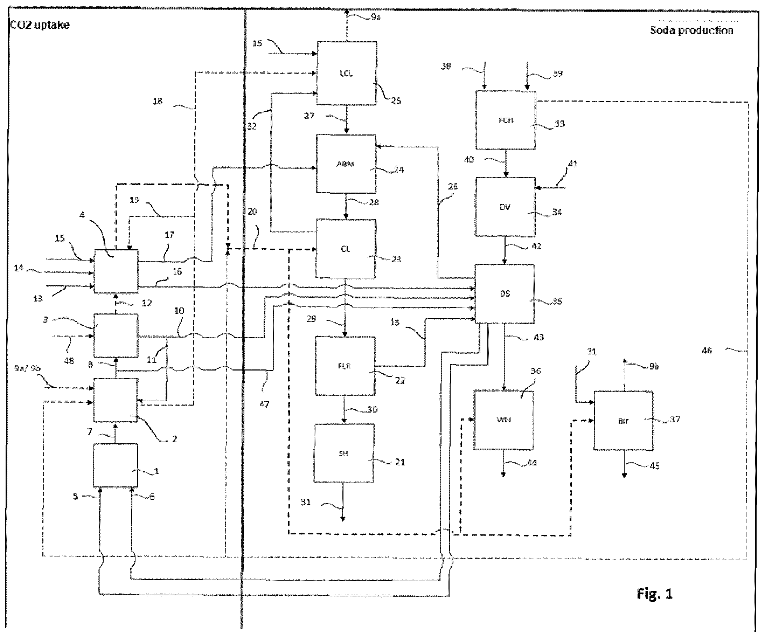

Fig. 1 presents a block scheme of an integrated process for uptake of CO₂ and production of soda. For the sake of legibility, not all process streams are shown in the scheme, although they are defined in the contents of the disclosure of the invention.

### Disclosure of the invention

This invention offers improvements in the production process of soda ash and/or in the production process of baking soda, consisting in:
- integrating the carbon dioxide uptake process with the production process of soda ash by using streams of dilute process gases containing carbon dioxide, streams of ammoniated and distilled condensates, mother liquor, diluted ammoniated brine from the filtering scrubbers/calcination/absorption and purified brine;
- using a part or whole stream of ammoniated condensates from the distillation process for carbon dioxide absorption from outlet gases from the soda ash production process and/or from the production process of baking soda and/or lean gas obtained from shaft lime kilns fired by a solid fuel or a gaseous fuel;
- using the mother liquor and dilute ammoniated brine for separating the carbon dioxide and ammonia gas mixture from regeneration of the absorbent solution;
- recovering carbon dioxide emitted within outlet gas from the process of carbonation of soda ash and/or recovering carbon dioxide emitted within outlet gas from the process of carbonation of baking soda, followed by using it in the production process of soda ash and/or in the production process of baking soda;
- increasing the concentration of carbon dioxide in lean gas produced in the lime burning process in shaft kilns;
- using the recovered carbon dioxide for improving the physicochemical properties of waste waters emitted from the distillation process in the soda ash plant, and for improving the properties of soil lime; and
- using, as a carbon dioxide absorbent, a mixture of ammoniated condensate and distilled condensate resulting from distillation and condensation of gases from the soda ash plant and/or condensate following partial desorption of carbon dioxide from the desorption column.

To make it possible to recover carbon dioxide from lean gases emitted from the soda ash and baking soda production processes, and also to use cheaper fine limestone in the lime burning process, it is necessary to introduce changes in the soda production process by using novel plant designed for uptake and concentration of carbon dioxide, integrated technologically with the soda ash production process *via* the effluent streams: ammoniated condensates, distilled condensates, mother liquor after filtration of raw sodium hydrogen carbonate, purified brine, and diluted ammoniated brine. Such a plant will become an integral part of the soda ash production plant, and the process for carbon dioxide recovering and concentrating, carried out therein, will become a part of the currently used production process.

The above-discussed waste streams of the process gas will be a source of full-value carbon dioxide, that will be recovered and recycled to the production process. By the same, additional amounts of baking soda can be produced without the need for additional lime demand beyond the requirements of the soda ash process. Increasing the concentration of carbon dioxide in process gases used in the carbonation processes will be advantageous for reducing the energy consumption needed for compression thereof. New possibilities will be also created to save limestone and fuel used in lime kilns.

The recovered carbon dioxide from the outlet gases from the soda ash carbonation plant and/or from the baking soda plant will be returned to the soda ash production process and/or to the baking soda production process and/or will be used for carbonation of a part or a whole stream of waste waters from the soda ash production process.

The plant for recovery and concentration of carbon dioxide will integratively cooperate with the soda ash plant by connecting with distillation plant and absorption plant in order to obtain CO₂ absorbent and/or to make up ammonia loss, to separate the gaseous mixture of ammonia and carbon dioxide, and to finally purify the stream of gas emitted to the atmosphere from ammonia, and also by providing the additional amounts of the recovered carbon dioxide to the processes of carbonation of soda ash and baking soda.

The ammoniated condensate **(5)** from distillation plant of soda ash **(35)** at a temperature of 60 - 70°C, at ammonia concentration of 120 - 180 mval/20, i.e., 6.0 - 9.0 M, and at carbon oxide concentration of 70 - 120 mval/20, i.e., 1.8 - 3.0 M, as a whole or a part of the prepared stream, is supplied to the mixer **(1),** to which also the distilled condensate **(6)** from the distillation plant of soda ash **(35)** is added in an amount sufficient to obtain the mixed condensate **(7)** at ammonia concentration in the range of 3.0 - 5.0 M, preferably 3.8 - 4.5 M, even more preferably 4.0 M.

This mixed condensate **(7)** prepared in the mixer **(1)** is cooled down to the temperature in the range of 20 - 50°C, more preferably down to the temperature of 30 - 40°C, and then it is supplied to the carbon dioxide absorption process **(2)** from lean gas **(9a, 9b, 46),** that consists in physical and chemical absorption of carbon dioxide in solution of ammonium salts. The absorption process is carried out under pressure of 1 - 5 bar(abs). As a result of the occurring processes, the stream of ammoniated condensates **(7)** undergoes carbonation. The carbon oxide concentration in liquid phase **(8)** increases at simultaneous decrease of the carbon oxide concentration and increase of ammonia contents in the gas phase **(18, 19)** downstream absorption **(2).**

One or two or three streams of lean gas, i.e., outlet gas from soda ash production **(9a),** outlet gas from baking soda production **(9b),** and/or gas from lime kilns **(46)** is/are supplied to the carbon dioxide absorption plant **(2).**

The outlet gas stream **(18, 19)** from carbon dioxide absorption **(2)** is supplied to the scrubber for separation of carbon dioxide and ammonia **(4)** and/or to the scrubber of gas from carbonation columns of the soda ash plant **(25),** wherein it is purified from the ammonia residues using purified brine **(15).** The ammonia absorbed in brine in the form of lean ammoniated brine **(27)** is returned to the absorption process of soda ash **(24).**

The whole stream of solution of ammonium salts **(8)** from the carbon dioxide absorption **(2),** or a part thereof **(47),** is supplied to the distillation plant of soda ash **(35),** in order to carry out the process of desorption of carbon dioxide. The recovered stream of carbon dioxide in a mixture with ammonia and steam **(26)** is then sent to the soda ash absorption plant **(24).**

Division of stream of the solution of ammonium salts from carbon dioxide absorption **(2)** into the stream **(8)** supplied to the carbon dioxide desorber **(3)** and the stream **(47)** supplied to the distillation plant of soda ash **(35)** is carried out in the range of 0 - 100% of the flow rate and depends on the amount of uptake of carbon dioxide from lean gas. For extremely low loads of the plant and lesser amounts of the carbon dioxide uptake, the whole amount of the solution **(8)** from the absorber **(2)** is supplied to the soda ash distillation plant **(35)** by the stream **(47).** For high loads of the carbon dioxide uptake plant, the stream of solution of ammonium salts **(47)** is reduced even to zero, and the whole amount of the solution **(8)** from the absorber **(2)** is supplied to the desorber **(3).**

The stream of solution of ammonium salts **(8)** from the carbon dioxide absorber **(2)** is supplied to the carbon dioxide desorber **(3),** in order to carry out the desorption of carbon dioxide.

The solution **(11)** from the carbon dioxide desorber **(3),** where carbon dioxide and ammonia were partially stripped, is returned as a whole or in part to the absorber **(2).** In order to provide flexibility of cooperation of the carbon dioxide uptake plant and the soda plant, bleeding **(10)** of part of this solution to the soda ash distillation plant **(35)** is used.

The gaseous stream **(12)** from the desorber **(3),** comprising a mixture of carbon dioxide, ammonia, and steam, is supplied to the gas separation scrubber **(4),** wherein ammonia is absorbed with mother liquor **(13)** and/or dilute ammoniated brine **(14).** The mother liquor **(13)** comes from the filtration of soda ash **(22).** The dilute ammoniated brine **(14)** comes from the filtration gas scrubbers and/or calcination and/or absorption from the soda ash absorption process **(24).** The mother liquor **(16)** from the scrubber **(4)** is warmed and ammonia-enriched and is supplied to the soda ash distillation plant **(35).** The dilute ammoniated brine **(17),** that has adsorbed the ammonia contained in the gas mixture, is directed to the soda ash absorption plant **(24).** The process of cooling gas occurs also in the scrubber **(4).**

Gas from the scrubber **(4),** following the final removal of ammonia using purified brine **(15),** is returned to use again in the production process. The stream of gas **(20)** containing >80 vol.% of carbon dioxide is supplied to the soda ash production process **(23)** and/or to the baking soda production process **(37)** and/or to the soil lime production process **(36).** The obtained dilute ammoniated brine **(17)** is transferred to the soda ash absorption process plant **(24)** .

Summing up, the integrated process for carbon dioxide uptake and for producing soda is carried under moderate pressures and at moderate temperatures. Novel elements of such technical solution comprise the use of distilled condensates and mother liquor, as well as dilute ammoniated brine from the scrubbers of gases from absorption and/or from filtration and/or from calcination. Due to maintaining the ammonia concentration at the level of 4 M in the mixed concentrate, and carrying out the carbon dioxide uptake at a temperature of 30 - 40°C, one avoids problems related to undesired precipitation of solids. Moreover, the possibility of dividing the stream of the solution of ammonium salts from absorption **(2)** into streams **(8)** and **(47)** allows optimising the operation depending on the plant load.

The advantages of such a technical solution comprise, *inter alia,* improved use of raw materials, reducing the environmental load of carbon dioxide emission, reducing the process streams, and thus reducing the energy consumption for compression, pumping, and heating or cooling, possibility of using process streams at lower carbon dioxide concentrations, possibility of using limestone of inferior quality, greater flexibility of plant operation, and possibility of receiving external streams containing waste carbon dioxide from outside the plant, e.g., from the cement plants, combined heat and power plants, metallurgy, or waste incineration plants.

Besides the obvious advantages for the natural environment, such process improvements have a significant economical aspect.

### Experimental part

The invention will be better comprehensible for the person skilled in the art after learning the embodiment examples. These examples are only illustrative and not intended to limit the scope of the invention in any manner.

### Example 1

In three consecutive tests, a thermostatted device for measuring the gas-liquid equilibria, equipped with the pressure meter, was charged with the carbon dioxide absorbent solutions: either the ammoniated condensate from the soda production process containing 12 wt.% of ammonia, 4 wt.% of carbon dioxide and water; or an ammonia solution at a concentration of 8 wt.%; or a solution of 30% monoethanolamine in water. These solutions were contacted with gaseous carbon dioxide at a constant temperature and a varied carbon dioxide pressure; each time, after reaching equilibrium the content of CO₂ absorbed in the absorbent solution was determined. Based on this, the dependence of absorption capacity on the partial pressure of carbon dioxide was determined, and the saturation degree was calculated as the mole ratio of CO₂ to amino groups in the solutions. The exemplary results of the absorption capacity measurements for the CO₂ partial pressure of 30 kPa and the absorption temperatures of 293 and 313K are summarised in Table 1.

**Table 1. The results of study of CO₂ absorption capacity under pressure of 30 kPa**

| Solution | Absorption capacity [mol CO₂/dm³] | |
|---|---|---|
| | 293K | 313K |
| 30% MEA | 3.15 | 2.97 |
| Ammonia solution | 4.33 | 3.26 |
| Ammoniated condensate | 5.94 | 5.04 |

### Example 2

Absorption of carbon dioxide from the stream (1000 Nm³/h) of lean kiln gas (30 vol.%) is carried out using aqueous 5 wt.% ammonia solution. The system is in principle composed from three parts: the absorption column where carbon dioxide is removed from exhaust gases, the desorption column where CO₂ desorption occurs and the absorbent solution is recovered, and a heat exchanger where heat exchange between the streams circulating in the system occurs. The ammonia solution, by absorbing carbon dioxide, forms labile chemical compounds. The CO₂ absorption process occurs in the absorption column having a height of 14 m and a diameter of 1.1 m, to which the lean kiln gas is introduced from the bottom and the aqueous ammonia solution is introduced from the top. The process is carried out under pressure of 105 kPa(abs) and at a temperature of 30-50°C. The gas leaving the absorption column contains CO₂ at a level of ca. 4.9 vol.%. The carbon dioxide-saturated ammonia solution leaves the absorption column and is warmed up in a heat exchanger, and then introduced into the desorption column. The desorption process of CO₂ from the solution is carried out in the desorption column having a height of 12 m and a diameter of 0.98 m, where the solution introduced into the top part of column desorbs by heating with streams of steam and CO₂ formed in the evaporator of the desorption column. The desorption process is carried out under pressure of 107 kPa(abs) and at a temperature of 87°C. Gas leaving the desorption column contains CO₂ at a level of ca. 99 vol.% on the dry gas basis. The regenerated and warmed ammonia solution leaves the desorption column and loses heat in the heat exchanger. The regenerated solution, now cooled to 44°C, is further cooled in a cooler to 30°C and then supplied to the absorption column. The rate of flow of the stream of solution supplied to the absorption column is 12000 kg/h. The content of carbon dioxide in the saturated solution is 0.696 mol CO₂/mol NH₃, and the content of carbon dioxide in the regenerated solution is 0.234 mol CO₂/mol NH₃. The efficiency of CO₂ isolation is 87.9% and the energy consumption of the system is 2.8 MJ/kg CO₂.

### Example 3

An analogous process, using the same equipment configuration, is carried out with aqueous 5% ammonia solution and 1000 Nm³/h of outlet gas from the raw soda carbonation plant having the CO₂ content of 11.5 vol.%. The CO₂ absorption process is carried out in the absorption column having a height of 8 m and a diameter of 1 m, at a temperature of 30-40°C and under pressure of 104 kPa(abs). The desorption process is carried out in the desorption column having a height of 6 m and a diameter of 0.6 m, at a temperature of 82°C and under pressure of 105 kPa(abs). The rate of flow of the stream of solution circulating in the system is 7375 kg/h. The carbon oxide content in the saturated solution is 0.306 mol CO₂/mol NH₃, and the carbon oxide content in the regenerated solution is 0.193 mol CO₂/mol NH₃. The efficiency of CO₂ isolation is 89.7% and the energy consumption of the system is 2.94 MJ/kg CO₂.

### Example 4

6.5 m³/h of ammoniated condensates at a temperature of 60°C having the ammonia concentration of 6 M, and 2.2 m³/h of the distilled condensates are supplied to the condensate mixer. Mixing results in a condensate stream having the ammonia concentration of 4.5 M, that is supplied to the carbon dioxide absorber. Part of the solution downstream desorption of carbon dioxide, at a temperature of 75°C, is returned to the carbon dioxide absorber. Before entering the absorber, this stream is cooled down to a temperature of 30°C. Part of the stream of solution from the desorber (in an amount of 8 m³/h) is directed to the soda ash plant. A lean gas from the baking soda production process, in an amount of 5000 m³/h and containing 25 vol.% of CO₂, is introduced to the bottom of the carbon dioxide absorber, at a temperature of 30°C and pressure of 3 bar(abs). The process of carbon dioxide absorption is carried out in the absorber having the diameter of 1.8 m and the height of 15 m. The solution of ammonium salts from the absorber is supplied to the carbon dioxide desorber, at a temperature of 40°C in an amount of 31 m³/h. The gaseous stream from the absorber, that is carbon dioxide-depleted and ammonia-enriched, at a temperature of 38°C and a pressure of 1.5 bar(abs), is directed to the scrubber of gas after carbonation in the soda ash plant. Low-pressure steam at a temperature of 200°C and a pressure of 2 bar(abs), in an amount of 1.9 t/h, is supplied as a heat source to the carbon dioxide desorber having a height of 15 m

and a diameter of 1.5 m. The stream of gaseous mixture composed of carbon dioxide, ammonia and steam, under the pressure of 1.5 bar(abs), that forms in the desorber, is supplied to the gas separation scrubber. The mother liquor containing 1.3 M of unreacted ammonia and 1 M of carbon dioxide, at a temperature of 28°C, is added to this scrubber in order to absorb ammonia. The mother liquor is also warmed and is returned to the distillation plant of soda ash. In order to remove the residual ammonia contained in the gaseous mixture downstream desorption, purified brine, in an amount of 10 m³/h at a temperature of 15°C, is added to the gas separation scrubber. The ammonia-enriched brine downstream the gas separation scrubber is supplied to the soda ash plant. The carbon dioxide stream (1200 Nm³/h), containing >95 vol.% of CO₂, is supplied into the soda ash production process, baking soda and soil lime.

**The legend**

| *Number* | *Description* |
|---|---|
| ***1*** | Condensate mixer |
| ***2*** | Carbon dioxide absorber |
| ***3*** | Carbon dioxide desorber |
| ***4*** | Gas separation scrubber |
| ***5*** | Ammoniated condensate |
| ***6*** | Distilled condensate |
| ***7*** | Mixed condensate |
| ***8*** | Solution of ammonium salts downstream CO₂ absorption |
| ***9a*** | Lean gas from the soda ash production processes |
| ***9b*** | Lean gas from the baking soda production processes |
| ***10*** | The solution downstream CO₂ desorption-bleeding to production of soda ash |
| ***11*** | The solution downstream CO₂ desorption-bleeding to the carbon dioxide absorber |
| ***12*** | CO₂ and NH₃ gas mixture downstream desorption |
| ***13*** | Mother liquor |
| ***14*** | Dilute ammoniated brine |
| ***15*** | Purified brine |
| ***16*** | Warmed mother liquor |
| ***17*** | Dilute ammoniated brine |
| ***18*** | Outlet gas from carbon dioxide absorption - bleeding to the production of soda ash |
| ***19*** | Outlet gas from carbon dioxide absorption - bleeding to the gas separation scrubber |
| ***20*** | Concentrated gas from the uptake plant |
| ***21*** | Calcination |
| ***22*** | Filtration |
| ***23*** | Carbonation |
| ***24*** | Ammonia absorption |
| ***25*** | Scrubber of gas after carbonation |
| ***26*** | Ammonia gas |
| ***27*** | Ammoniated brine for absorption |
| ***28*** | Ammoniated brine for carbonation |
| ***29*** | Raw bicarbonate suspension |
| ***30*** | Raw bicarbonate |
| ***31*** | Soda ash |
| ***32*** | Post-reaction gas from carbonation |
| ***33*** | Lime burning |
| ***34*** | Slaking of burnt lime |
| ***35*** | Distillation |
| ***36*** | Soil lime plant |
| ***37*** | Baking soda plant |
| ***38*** | Coke |
| ***39*** | Limestone |
| ***40*** | Burnt lime |
| ***41*** | Water |
| ***42*** | Lime milk |
| ***43*** | Distiller effluents |
| ***44*** | Soil lime |
| ***45*** | Baking soda |
| ***46*** | Lean kiln gas |
| ***47*** | Solution of ammonium salts - bleeding to distillation of soda ash |
| ***48*** | Energetic medium |

## Claims

1. Process for production of sodium carbonate and hydrogen carbonate integrated with the process for uptake and concentrating carbon dioxide,
wherein the process for uptake and concentrating carbon dioxide comprises:
- mixing the ammoniated condensate **(5)** and the distilled condensate **(6)** from the soda ash plant **(35),** to form the mixed condensate **(7)** at an ammonia concentration in the range of 3.0 - 5.0 M,
- cooling down the mixed condensate **(7)** down to the temperature of 20 - 50°C,
- contacting the mixed condensate **(7)** with the carbon dioxide-containing lean gas from the soda ash plant **(9a),** and/or lean gas from the baking soda plant **(9b),** and/or lean kiln gas **(46)** from lime kilns,
- physical and chemical absorption of carbon dioxide from lean gases **(9a, 9b, 46)** into the mixed condensate **(7),** to form a carbon oxide-enriched solution of ammonium salts, that is divided in the range of from 0 to 100% of the flow rate into the stream **(8)** supplied to the desorber **(3)** and the stream **(47)** supplied to the distillation plant of soda ash **(35),** as well as the outlet gas stream **(18, 19)** depleted in carbon dioxide,
- desorbing of carbon dioxide and ammonia from the carbon dioxide-enriched solution of ammonium salts **(8)** by heating in the desorber **(3),** to form a gaseous mixture of carbon dioxide, ammonia, and steam **(12),** as well as a solution downstream desorption **(10, 11),**
- returning a part or whole solution downstream desorption **(10, 11)** as a stream **(11)** returning to the absorber **(2),** and supplying the remaining part of this solution as bleeding **(10)** to the distillation plant of soda ash **(35),**
- directing the gaseous mixture of carbon dioxide, ammonia, and steam **(12)** to the gas separation scrubber **(4),**
- contacting the mixture **(12)** in the gas separation scrubber **(4)** with the mother liquor stream **(13)** from the filtration of soda ash **(22)** and/or the stream of dilute ammoniated brine **(14),**
and with the stream of purified brine **(15),**
with simultaneous cooling the gas,
- collecting the concentrated gas stream **(20)** containing of carbon dioxide >80 vol.% from the scrubber **(4),**
- collecting the dilute ammoniated brine **(17)** from the scrubber **(4),**
whereas the process for preparation of sodium carbonate and hydrogen carbonate comprises:
- supplying the concentrated gas **(20)** to the carbonation column of the soda ash plant **(23),** to the baking soda plant **(37),** and to the soil lime plant **(36),**
- absorption of carbon dioxide from the concentrated gas **(20)** in the carbonation column of the soda ash plant **(23)** in contact with the ammoniated brine **(28)** to yield post-reaction gas from carbonation **(32)** and raw bicarbonate suspension **(29),**
- supplying the dilute ammoniated brine **(17)** to the ammonia absorber **(24)** of the soda ash plant,
- supplying the carbon dioxide-depleted outlet gas stream **(18)** from the absorber **(2)** to the scrubber of gas downstream carbonation **(25),**
- supplying the stream of solution downstream desorption **(10)** to the distillation plant of soda ash **(35),**
- supplying the stream of carbon oxide-enriched solution of ammonium salts **(47)** to the distillation plant of soda ash **(35).**
- supplying the warmed and ammonia-enriched mother liquor stream **(16)** to the distillation plant of soda ash **(35).**

2. Process according to claim 1, **characterised in that** the mixed condensate steam **(7)** is maintained at the ammonia concentration of 4 M.

3. Process according to claim 1 or 2, **characterised in that** the mixed condensate stream **(7)** is cooled down to temperature of 30 - 40°C.

4. Process according to anyone of claims 1 - 3, **characterised in that** contacting the mixed condensate **(7)** with lean gases **(9a, 9b, 46)** is carried out under pressure of 1 - 5 bar(abs).

5. Process according to anyone of claims 1 - 4, **characterised in that** division of stream of the solution of ammonium salts from carbon dioxide absorption into the streams **(8)** and **(47)** is adjusted to the load of the carbon dioxide uptake plant and the operating conditions of the soda ash plant.

6. Process according to anyone of claims 1 - 5, **characterised in that** division of stream of the solution from the carbon dioxide desorber **(3)** into streams **(11)** and **(10)** is adjusted to the load of the carbon dioxide uptake plant and the operating conditions of the soda ash plant.

7. Process according to anyone of claims 1 - 6, **characterised in that** carbon dioxide recovered in the uptake plant, contained in the concentrated gas stream **(20)** is consumed in the production process of soda ash and/or baking soda and/or soil lime.

## Patentansprüche

1. Verfahren zur Herstellung von Natriumcarbonat und Hydrogencarbonat, wobei dieses Verfahren mit dem Verfahren zur Aufnahme und Aufkonzentrierung von Kohlendioxid integriert ist,
worin das Verfahren zur Aufnahme und Aufkonzentrierung von Kohlendioxid umfasst:
- Vermischen des ammoniakalischen Kondensats **(5)** mit dem destillierten Kondensat **(6)** aus der Sodaasche-Anlage **(35),** um das vermischte Kondensat **(7)** mit einer Ammoniakkonzentration im Bereich von 3,0 - 5,0 M zu bilden,
- Abkühlen des vermischten Kondensats **(7)** auf die Temperatur von 20 - 50°C,
- Inkontaktbringen des vermischten Kondensats **(7)** mit dem kohlendioxidhaltigen Armgas aus der Sodaasche-Anlage **(9a),** und/oder mit dem Armgas aus der Backsoda-Anlage **(9b),** und/oder mit dem Armgas **(46)** aus Kalköfen,
- physikalische und chemische Absorption von Kohlendioxid aus Armgasen **(9a, 9b, 46)** in das vermischte Kondensat **(7),** um eine mit Kohlendioxid angereicherte Lösung von Ammoniumsalzen, die im Bereich von 0 bis 100% der Strömungsrate in den dem Desorber **(3)** zugeführten Strom **(8)** und in den der Destillationsanlage für Sodaasche **(35)** zugeführten Strom **(47)** aufgeteilt wird, sowie um den an Kohlendioxid abgereicherten Abgasstroms **(18, 19) zu** bilden,
- Desorbieren von Kohlendioxid und Ammoniak aus der mit Kohlendioxid angereicherten Lösung von Ammoniumsalzen **(8)** durch Erhitzen in dem Desorber **(3),** um ein gasförmiges Gemisch aus Kohlendioxid, Ammoniak und Dampf **(12),** sowie um eine Lösung nach der Desorption **(10, 11)** zu bilden,
- Rückführung eines Teils oder der gesamten Lösung nach der Desorption **(10, 11)** als eines Stroms **(11),** der zum Absorber **(2)** zurückgeführt wird, und Zuführen des verbleibenden Teils dieser Lösung als Entnahme **(10)** zur Destillationsanlage für Sodaasche **(35),**
- Leiten des gasförmigen Gemisches von Kohlendioxid, Ammoniak und Dampf **(12)** zum Gaswäscher für die Gastrennung **(4),**
- Inkontaktbringen des Gemisches **(12)** im Gaswäscher für Gastrennung **(4)** mit dem Mutterlaugenstrom **(13)** aus der Filtration von Sodaasche **(22)** und/oder dem Strom von verdünnter ammoniakalischer Sole **(14),**
und mit dem Strom von gereinigter Sole **(15),**
unter gleichzeitiger Abkühlung des Gases,
- Sammeln des konzentrierten Gasstromes **(20)** mit dem Gehalt von Kohlendioxid > 80 Vol.-% aus dem Gaswäscher **(4),**
- Sammeln der verdünnten ammoniakalischen Sole **(17)** aus dem Gaswäscher **(4),** wobei das Verfahren zur Herstellung von Natriumcarbonat und Hydrogencarbonat umfasst:
- Zuführen des konzentrierten Gases **(20)** zur Karbonisierungskolonne der Sodaasche-Anlage **(23),** zur Backsoda-Anlage **(37)** und zur Bodenkalk-Anlage **(36),**
- Absorption von Kohlendioxid aus dem konzentrierten Gas (20) in der Karbonisierungskolonne der Soda-Asche-Anlage **(23)** im Kontakt mit der ammoniakalischen Sole **(28),** um Nachreaktionsgas aus Karbonisierung **(32)** und rohe Bicarbonatsuspension **(29)** zu erhalten,
- Zuführen der verdünnten ammoniakalischen Sole **(17)** zum Ammoniakabsorber **(24)** der Sodaasche-Anlage,
- Zuführen des an Kohlendioxid abgereicherten Abgasstroms **(18)** aus dem Absorber **(2)** zum Gaswäscher nach der Karbonisierung **(25),**
- Zuführen des Lösungsstroms nach der Desorption **(10)** zur Destillationsanlage für Sodaasche **(35),**
- Zuführen des mit Kohlenstoffoxid angereicherten Lösungsstroms der Ammoniumsalze **(47)** zur Destillationsanlage für Sodaasche **(35).**
- Zuführen des erwärmten und mit Ammoniak angereicherten Mutterlaugenstroms **(16)** zur Destillationsanlage für Sodaasche **(35).**

2. Verfahren nach Anspruch 1, **dadurch gekennzeichnet, dass** der Dampf des vermischten Kondensats **(7)** auf der Ammoniakkonzentration von 4 M gehalten wird.

3. Verfahren nach Anspruch 1 oder 2, **dadurch gekennzeichnet, dass** der Strom des vermischten Kondensats **(7)** auf eine Temperatur von 30 bis 40°C abgekühlt wird.

4. Verfahren nach einem der Ansprüche 1 - 3, **dadurch gekennzeichnet, dass** das Inkontaktbringen des vermischten Kondensats **(7)** mit Armgasen **(9a, 9b, 46)** unter einem Druck von 1 bis 5 bar (abs) durchgeführt wird.

5. Verfahren nach einem der Ansprüche 1 - 4, **dadurch gekennzeichnet, dass** die Aufteilung des Lösungsstroms von Ammoniumsalzen aus der Kohlendioxidabsorption in die Ströme **(8)** und **(47)** entsprechend der Belastung der Kohlendioxidaufnahmeanlage und der Betriebsbedingungen der Sodaasche-Anlage eingestellt wird.

6. Verfahren nach einem der Ansprüche 1 bis 5, **dadurch gekennzeichnet, dass** die Aufteilung des Lösungsstroms aus dem Kohlendioxiddesorber **(3)** in die Ströme **(11)** und **(10)** entsprechend der Belastung der Kohlendioxidaufnahmeanlage und der Betriebsbedingungen der Soda-Anlage eingestellt wird.

7. Verfahren nach einem der Ansprüche 1 - 6, **dadurch gekennzeichnet, dass** das in der Aufnahmeanlage zurückgewonnene Kohlendioxid, das im konzentrierten Gasstrom **(20)** enthalten ist, bei der Herstellung von Sodaasche und/oder Backsoda und/oder Bodenkalk verbraucht wird.

## Revendications

1. Un procédé de production de carbonate de sodium et d'hydrogénocarbonate intégré au procédé d'absorption et de concentration de dioxyde de carbone,
dans lequel le procédé d'absorption et de concentration de dioxyde de carbone comprend:
- mélanger le condensat ammonié **(5)** et le condensat distillé **(6)** de l'installation de carbonate de soude **(35),** pour former le condensat mixte **(7)** à une concentration en ammoniac dans la plage de 3,0 à 5,0 M,
- refroidir le condensat mélangé **(7)** jusqu'à la température de 20 à 50°C,
- mettre le condensat mixte **(7)** en contact avec un gaz pauvre contenant du dioxyde de carbone de l'installation de carbonate de soude **(9a)** et/ou un gaz pauvre de l'installation de bicarbonate de soude **(9b)** et/ou un gaz pauvre de four **(46)** des fours à chaux,
- absorption physique et chimique du dioxyde de carbone des gaz pauvres **(9a, 9b, 46)** dans le condensat mixte **(7),** pour former une solution de sels d'ammonium enrichie en oxyde de carbone, divisée dans la plage de 0 à 100% du débit dans le flux **(8)** fourni au désorbeur **(3)** et le flux **(47)** fourni à l'installation de distillation de carbonate de soude **(35),** ainsi que le flux de gaz de sortie **(18, 19)** appauvri en dioxyde de carbone,
- désorption du dioxyde de carbone et de l'ammoniac de la solution enrichie en dioxyde de carbone de sels d'ammonium **(8)** par chauffage dans le désorbeur **(3),** pour former un mélange gazeux de dioxyde de carbone, d'ammoniac et de vapeur **(12),** ainsi qu'un solution de désorption **(10, 11)** en aval,
- retourner une partie ou la totalité de la solution en aval de la désorption **(10, 11)** sous forme de flux **(11)** revenant à l'absorbeur **(2),** et alimenter la partie restante de cette solution en purge **(10)** vers l'installation de distillation de carbonate de soude **(35),**
- diriger le mélange gazeux de dioxyde de carbone, d'ammoniac et de vapeur **(12)** vers l'épurateur de séparation de gaz **(4),**
- mettre le mélange **(12)** en contact dans l'épurateur de séparation de gaz **(4)** avec le flux de liqueur mère **(13)** provenant de la filtration de carbonate de soude **(22)** et/ou du flux de saumure ammoniacale diluée **(14),**
et avec le flux de saumure purifiée **(15),**
avec refroidissement simultané du gaz,
- recueillir le flux de gaz concentré **(20)** contenant du dioxyde de carbone > 80% en volume à partir de l'épurateur **(4),**
- recueillir la saumure ammoniacale diluée **(17)** à partir de l'épurateur **(4),**
tandis que le procédé de préparation du carbonate de sodium et de l'hydrogénocarbonate comprend:
- fournir le gaz concentré **(20)** à la colonne de carbonatation de l'installation de carbonate de soude **(23),** à l'installation de bicarbonate de soude **(37)** et à l'installation de chaux du sol **(36),**
- absorption de dioxyde de carbone du gaz concentré **(20)** dans la colonne de carbonatation de l'installation de carbonate de soude **(23)** en contact avec la saumure ammoniacale **(28)** pour produire un gaz de post-réaction de la carbonatation **(32)** et de la suspension de bicarbonate brut **(29),**
- fournir la saumure ammoniacale diluée **(17)** à l'absorbeur d'ammoniac **(24)** de l'installation de carbonate de soude,
- fournir le flux de gaz de sortie **(18)** appauvri en dioxyde de carbone de l'absorbeur **(2)** à l'épurateur de gaz en aval de la carbonatation **(25),**
- fournir le flux de solution en aval de la désorption **(10)** à l'installation de distillation de carbonate de soude **(35),**
- fournir le flux de solution enrichie en oxyde de carbone de sels d'ammonium **(47)** à l'installation de distillation de carbonate de soude **(35).**
- fournir le flux de liqueur mère **(16)** réchauffé et enrichi en ammoniac à l'installation de distillation de carbonate de soude **(35).**

2. Procédé selon la revendication 1, **caractérisé en ce que** le flux de condensat mixte **(7)** est maintenue à la concentration en ammoniac de 4 M.

3. Procédé selon la revendication 1 ou 2, **caractérisé en ce que** le flux de condensat mixte (7) est refroidi à une température de 30 à 40°C.

4. Procédé selon l'une quelconque des revendications 1 à 3, **caractérisé en ce que** la mettre en contact du condensat mixte **(7)** avec des gaz pauvres **(9a, 9b, 46)** est effectuée sous une pression de 1 à 5 bars (absolu).

5. Procédé selon l'une quelconque des revendications 1 à 4, **caractérisé en ce que** la division du flux de la solution de sels d'ammonium de l'absorption de dioxyde de carbone dans les flux **(8)** et **(47)** est ajustée à la charge de l'installation d'absorption de dioxyde de carbone et du fonctionnement conditions de l'installation de carbonate de soude.

6. Procédé selon l'une quelconque des revendications 1 à 5, **caractérisé en ce que** la division du flux de la solution du désorbeur de dioxyde de carbone **(3)** en flux **(11)** et **(10)** est ajustée à la charge de l'installation d'absorption de dioxyde de carbone et du fonctionnement conditions de l'installation de carbonate de soude.

7. Procédé selon l'une quelconque des revendications 1 à 6, **caractérisé en ce que** le dioxyde de carbone récupéré dans l'installation d'absorption, contenu dans le flux de gaz concentré **(20)** est consommé dans le procédé de production de carbonate de soude et/ou de bicarbonate de soude et/ou de chaux du sol.
